# EUROPEAN PATENT SPECIFICATION

(11) **EP 2 459 810 B1**
(45) Date of publication and mention of the grant of the patent: **13.06.2018**
(21) Application number: 10742226.3
(22) Date of filing: 30.07.2010
(51) Int. Cl.: F16L 33/08, E03D 11/14, E03D 11/16, F16L 33/30

(54) **TOILET PAN CONNECTOR**
ANSCHLUSSVORRICHTUNG FÜR TOILETTENSCHÜSSEL
DISPOSITIF DE FIXATION POUR CUVETTE DE TOILETTE

(30) Priority: 31.07.2009 GB 0913380
(43) Date of publication of application: 06.06.2012
(73) Proprietor: McAlpine & Co Limited, Hillington Industrial Estate Hillington, Glasgow G52 4LF (GB)
(72) Inventor: MCALPINE, James Edward, Glasgow G52 4LF (GB)
(74) Representative: Shanks, Andrew
(86) International application number: PCT/GB2010/001445
(87) International publication number: WO 2011/012860

(56) References cited:
- DE-C- 863 330
- DE-U1- 9 414 741
- FR-A1- 2 677 688
- GB-A- 1 559 645
- US-A- 4 224 702

## Description

### FIELD OF THE INVENTION

This invention relates to a connector for use in toilet waste flow systems.

### BACKGROUND TO THE INVENTION

Forming a good seal between a toilet pan and a waste pipe is crucial. If the seal fails then undesirable odours and even waste products can leak into the surrounding environment. The form, orientation and position of the toilet pan outlet along with the form, orientation and position of the waste pipe inlet may all impede the sealed connection between the toilet pan outlet and the waste pipe using rigid conduit. Consequently, flexible connectors are now in common use to connect toilet pans to waste pipes.

Flexible connectors commonly comprise one collar for connection to the toilet pan waste outlet, a flexible conduit and another collar for connection to the waste pipe inlet. To provide a seal between the connector and the pan outlet, the first collar is commonly provided with one or more flexible annular ribs extending inwards. The annular ribs are attached at their outer circumference at intervals along an inner surface of the first collar. The inner diameter of the ribs is less than an outer diameter of the toilet pan waste outlet. The flexible ribs deform when the connector is inserted over the toilet pan outlet, such that the ribs provide circumferential contact between the outlet and the connector, sealing the connection.

The collar for connection to the waste pipe inlet typically has a similar seal arrangement, however the flexible annular ribs extend outwards from the collar since the waste pipe collar is generally inserted into the waste pipe inlet.

Commonly the toilet pan outlet outer surface is cylindrical. However, the outer surface is often not perfectly cylindrical, for example toilet pan production processes often result in variations such as oval or partially oval waste outlets, or waste outlets with curved axis. These and other forms of misshapen toilet pan waste outlet can impede secure connection of the outlet to the connector.

Typically, application of the connector involves first one collar of the flexible connector being connected and the connector subsequently manipulated to enable the other collar to then be connected. Connection of the collars generally involves the collars being forced into inlets or over outlets. Connecting both collars of the connector generally requires movement in different directions, such that forcing the second collar into place may dislodge the first collar, jeopardising the integrity of the seal.

The collars are held in position by friction: between the collars and the inlet and outlet respectively. Since the levels of both friction and sealing are proportional to the normal force between the collars and inlet or outlet, there is a trade-off between ease of application of the collar and level of seal. Friction may be temporarily reduced during installation of the connector, for example using lubricants, or increased after installation, for example by heating the collar to cause it to shrink. Such methods may aid installation of individual collars slightly, however, by definition, they also impede any subsequent removal of the collar, for example in the event the connector or toilet pan requires replacement or to gain access to the waste pipe.

The form of the toilet pan and the location of the waste pipe connection may impede access to and/or vision of the waste pipe connection and/or the toilet pan connection. For example, back-to-wall toilet pans commonly involve awkward connections due to the proximity of a wall to the pan outlet and the obscuration of the outlet by the pan itself. Access to the waste pipe inlet may also be impeded, for example the inlet may be located behind an opening in a wall, or under a cistern. Commonly the connector will be first attached to the toilet pan waste outlet using predominantly tactile feedback. The flexible connector is subsequently manipulated to connect to the waste pipe, often predominantly using tactile feedback.

Typically the seal is tested by flushing the toilet to identify any leaks. With impaired views of the connections, it is not always possible to identify small leaks and/or connections that are not robust and liable to fail in due course.

To improve access to and/or vision of the waste pipe and toilet pan outlet during connection and/or maintenance, the toilet pan is sometimes connected to the waste pipe prior to locating the toilet pan in its position of use. The toilet pan is connected to the waste pipe via the flexible connector and subsequently moved to the toilet's final position of use.

Any movement of the connector, for example during movement of the toilet pan, may cause the seal between the toilet pan and the connector to become dislodged, jeopardising the integrity of the seal.

US4224702 discloses an apparatus for installing or replacing pipe which extends between a toilet and a ferrule structure projecting from a soil stack. The apparatus couples the ferrule structure to a length of discharge pipe attachable to a toilet using a compressible sleeve which extends over facing ends of the discharge pipe and ferrule.

DE863330 discloses a connector for toilets, sinks and the like, which is made of lead or some other building material of appropriate workability. The connector has a sleeve portion for connecting to an outlet and a tube portion for connecting to waste pipe. The inner surface of the sleeve has a circumferential groove or a plurality of such grooves, and the outer surface of the tube has circumferential grooves and the edges of the grooves extend across the tube wall.

GB1559645 discloses a flexible joint assembly for connecting a toilet bowl to a waste pipe. Another type of connection is shown in FR2677688.

### SUMMARY OF THE INVENTION

According to a first aspect of the invention, there is provided a kit for connecting a toilet pan waste outlet to a waste pipe according to claims 1 to 16.

In at least one embodiment, such a kit facilitates achieving and maintaining the secure connection of a toilet pan to a waste pipe inlet with a connector even when access to and/or vision of the connector is impaired. The fastener ensures that the toilet pan outlet connection remains secure even when the connector and/or the toilet pan are manipulated.

The fastener may be configured to adjust the retaining force.

The fastener may be configured to reduce the retaining force, for example to facilitate disconnection.

The fastener may be located on the connector prior to connection to the outlet. For example, the fastener may be placed around the sleeve of the connector, prior to connection to the outlet. Alternatively, the connector may first be connected to the outlet and the fastener subsequently applied.

The fastener may be selected from one or more of the following groups: tie wraps, hose clips, strapping, belts. Additionally, or alternatively, the fastener may comprise one or more hinged parts.

The fastener may be a distinct component or group of components separable from the connector. Alternatively, the fastener may be formed integral with the connector. For example, the fastener may comprise two or more flange surfaces adjustably separated.

The fastener may be configurable to have an inner diameter larger than the largest outer diameter of the flexible connector. This enables the fastener to be applied to or removed from the connector after the connector has been connected at one end, even when the fastener is for use in cooperation with the already connected end of the connector.

Additionally or alternatively, the fastener may be applied in a discontinuous state, such that the fastener may be applied to or removed from the connector subsequent to connection of the connector at one or both ends.

According to a further aspect of the present invention, there is provided a method for sealing a connector to a toilet pan waste outlet according to claims 17 to 19.

The force may be adjustable.

The force may be applied permanently. Alternatively, the force may be applied temporarily.

The force may be applied using a fastener.

The method may include subsequently reducing the friction between the sleeve and the outlet.

The friction may be reduced by reducing the applied force.

### BRIEF DESCRIPTION OF THE DRAWINGS

Embodiments of the present invention will now be described with reference to the accompanying drawings in which:
Figure 1 is a perspective view of a toilet pan connector kit according to a first embodiment of the invention;
Figure 2 is a perspective view of the kit of Figure 1, with the connector of the kit in an extended state;
Figure 3 is a perspective view of the kit of Figure 1 with the connector of the kit in a flexed state;
Figure 4 is a perspective view of the kit of Figure 1 with the kit in use in combination with an exemplary toilet pan.
Figure 5 is a cross-sectional view of part of the connector of Figure 1, showing a sleeve portion.

### DETAILED DESCRIPTION OF THE DRAWINGS

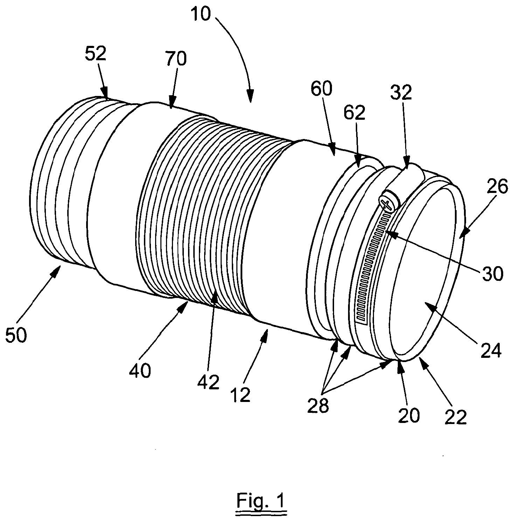

Reference is first made to Figures 1, 2 and 3 showing perspective views of a toilet pan waste connector kit, generally depicted by reference numeral 10 according to a first embodiment of the present invention. The connector kit 10 comprises a connector 12 and a fastener 30.

The connector 12 comprises a toilet pan waste outlet connection portion 20, a conduit portion 40 and a waste pipe connection portion 50. In the embodiment shown, the toilet outlet connection portion 20 is connected to the conduit portion 40 via a rigid annular portion 60 using a combination of an interference fit and a weld cap 62.

The waste pipe connection portion 50 is connected to the conduit portion 40 via a rigid annular portion 70.

The conduit portion is a flexible pipe of the type disclosed, for example, in US Patents 4,846,510 and 4,927,191, and UK Patent 2,298,470. The pipe is flexible, in that it may be flexed to create up to 180° bends, and may also be axially extended or contracted. The pipe wall is also configured such that deformation of the pipe tends to be retained.

The toilet pan waste outlet connection portion 20 comprises a flexible sleeve 22. The sleeve 22 has a substantially cylindrical internal surface 24. The cylindrical surface 24 comprises a flared portion 26, easing insertion over the toilet pan waste outlet.

The fastener 30 is located on the outer surface of the sleeve 22 with the aid of sleeve ribs 28, which help maintain a longitudinal position of the fastener 30 on the sleeve 22 and ensure that a plane defined by the circumference of the fastener 30 is perpendicular to the longitudinal axis of the sleeve 22.

In the embodiment shown, the fastener 30 is a worm drive hose clip, however it will be understood that the fastener 30 could equally be selected from the following exemplary groups: tie wraps, strapping, belts. The fastener 30 can be tightened or loosened using a screw 32. Tightening the screw 32 decreases the internal diameter of the fastener 30, causing the fastener 30 to circumferentially compress the sleeve 22. The sleeve 22 is made from a soft synthetic rubber such that the sleeve 22 deforms under compression from the fastener 30. The internal surface 24 of the sleeve 22 is radially pressed against the outer surface of the toilet pan waste outlet such that a cylindrical contact surface seals the connection of the waste outlet to the connector 12.

The waste pipe connection portion 50 comprises a flexible member 52. The flexible member 52 is made from a soft synthetic rubber and has a number of flexible annular ribs 54 projecting outwards. The ribs 54 have an inner diameter less than the waste pipe and an outer diameter greater than the waste pipe, such that the ribs 54 flex upon insertion of the portion 50 into the waste pipe, ensuring a seal between the connector 12 and the waste pipe.

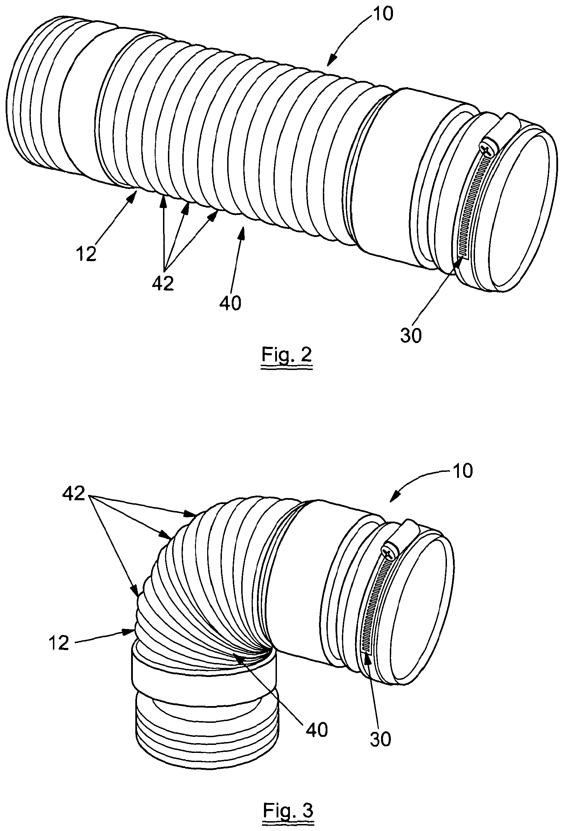

As can be seen from Figure 2, the flexible portion 40 of the connector 12 comprises a number of corrugated ribs 42. The corrugated ribs 42 allow the length of the connector 12 to be adjusted. As illustrated in Figure 3, the corrugated ribs 42 also allow the connector 12 to bend as well as extend and are configured such that the flexible portion will retain its form when configured by an operator. The connector 12 may be used to connect, for example, a horizontal toilet pan waste outlet to a vertical waste pipe.

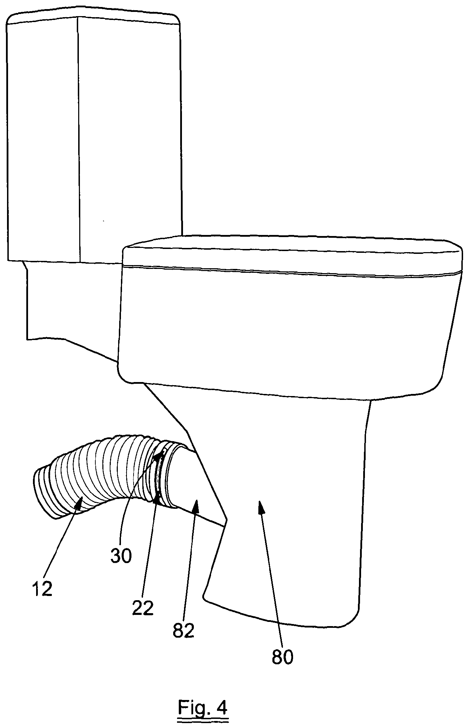

Figure 4 illustrates the kit 10 of figures 1, 2 and 3 connected to a toilet pan 80. The connector 12 is connected to the toilet pan waste outlet 82 by the sleeve 22. The sleeve 22 has been manipulated over the outlet 82 and secured in place by the fastener 30, forming a seal between the outlet 82 and the connector 12. Tightening of the fastener 30

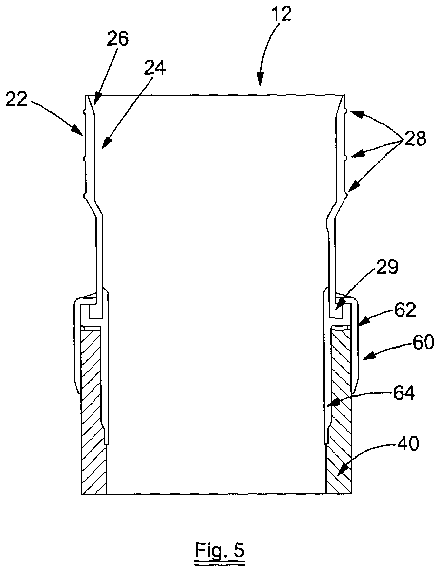

Figure 5 shows a cross section of a portion of the connector 12, including the sleeve 22 and part of the conduit portion 40. The sleeve ribs 28, the cylindrical surface 24 and a flared portion 26 of the sleeve are all shown. The flexible sleeve 22 has an annular disc 29 for attachment to the rigid annular portion 60. The rigid annular portion 60 comprises the weld cap 62 and an inner sleeve 64.

Various modifications may be made to the above-described embodiment without departing from the scope of the invention. For example, although the sleeve described has ribs for locating the fastener, this could be nodules or grooves or any other suitable geometry for locating the fastener. Similarly, although the conduit portion described is a flexible pipe with corrugated ribs, this could be another form of flexible pipe, for example.

## Claims

1. A kit (10) for connecting a toilet pan waste outlet (82) to a waste pipe, the kit (10) comprising:
a flexible toilet pan waste outlet connector (12), the flexible connector (12) including a flexible sleeve portion (22) adapted for connection over the outlet (82), a waste pipe connection portion (50) and a conduit portion (40),
wherein the flexible sleeve portion (22) is configured to form an axially extending contact surface with the outlet (82); and wherein the conduit portion (40) is a flexible pipe and is also axially extendable or contractable; and
a fastener (30), wherein the fastener (30) is configured to apply a retaining force circumferentially to the flexible sleeve portion (22) tending to retain the flexible sleeve portion (22) on the outlet (82) by increasing friction between the flexible sleeve portion (22) and the outlet (82);
wherein the flexible sleeve portion (22) is made from a soft synthetic rubber such that the flexible sleeve portion (22) is deformable under compression from the fastener (30),
wherein an internal surface (24) of the flexible sleeve portion (22) is radially pressable against an outer surface of the toilet pan waste outlet (82) such that a cylindrical contact surface seals the connection of the waste outlet (82) to the flexible connector (12), and
wherein the flexible sleeve portion (22) comprises sleeve ribs (28), nodules or grooves on the outer surface of the flexible sleeve portion (22) for locating the fastener (30), the sleeve ribs (28), nodules or grooves helping maintain a longitudinal position of the fastener (30) on the flexible sleeve portion (22) and ensuring that a plane defined by the circumference of the fastener (30) is perpendicular to the longitudinal axis of the flexible sleeve portion (22).

2. The kit (10) of claim 1, wherein the fastener (30) is at least one of: configured to adjust the retaining force; configured to reduce the retaining force; and tightenable.

3. The kit (10) of any preceding claim, wherein the fastener (30) is at least one of: located on the connector (12) prior to connection to the outlet (82); and placed around the sleeve portion (22) of the connector (12), prior to connection to the outlet (82).

4. The kit (10) of either of claims 1 or 2, wherein, in use, the connector (12) is first connected to the outlet (82) and the fastener (30) subsequently applied.

5. The kit (10) of any preceding claim, wherein the fastener (30) is selected from one or more of the following groups: tie wraps, hose clips, strapping, and belts.

6. The kit of any preceding claim, wherein the fastener (30) comprises one or more hinged parts.

7. The kit (10) of any preceding claim, wherein the fastener (30) is one of: a distinct component or group of components separable from the connector (12); formed integral with the connector (12).

8. The kit of claim 7, wherein the fastener, when formed integral with the connector, comprises two or more flange surfaces adjustably separated.

9. The kit (10) of any preceding claim, wherein the fastener (30) is configurable to have an inner diameter larger than the largest outer diameter of the flexible connector (12).

10. The kit of any preceding claim, wherein the fastener (30) is applicable in a discontinuous state, such that the fastener (30) is applicable to or removable from the connector (12) subsequent to connection of the connector (12) at one or both ends.

11. The kit (10) of any preceding claim, wherein the flexible conduit portion (40) of the connector (12) comprises a number of corrugated ribs (42) to allow the length of the connector (12) to be adjusted and to allow the connector (12) to bend as well as extend and are configured such that the flexible conduit portion (40) will retain its form when configured by an operator.

12. The kit (10) of any preceding claim, wherein the internal surface (24) of the flexible sleeve portion (22) comprises a cylindrical internal surface.

13. The kit (10) of claim 12, wherein the cylindrical internal surface (24) comprises a flared portion (26) for easing insertion over the toilet pan waste outlet (82).

14. The kit (10) of any preceding claim, wherein the flexible sleeve portion (22) comprises a toilet pan waste outlet connection portion (20) connected to the conduit portion (40) via a rigid annular portion (60) using a combination of an interference fit and a weld cap (62).

15. The kit (10) of claim 14, wherein the flexible sleeve portion (22) has an annular disc (29) for attachment to the rigid annular portion (60).

16. The kit (10) of any preceding claim, wherein the waste pipe connection portion (50) comprises a flexible member (52) made from a soft synthetic rubber and having a number of flexible annular ribs (54) projecting outwards, the ribs (54) having an inner diameter less than the waste pipe and an outer diameter greater than the waste pipe, such that the ribs (54) flex upon insertion of the waste pipe connection portion (50) into the waste pipe, ensuring a seal between the flexible toilet pan waste outlet connector (12) and the waste pipe.

17. A method for sealing the flexible toilet pan waste outlet connector (12) of the kit of any preceding claim to a toilet pan waste outlet (82), the method comprising:
applying a flexible sleeve portion (22) of the toilet pan waste outlet connector (12) over the toilet pan waste outlet (82), and radially pressing the internal surface (24) of the flexible sleeve portion (22) against an outer surface of the toilet pan waste outlet (82) such that a cylindrical contact surface seals the connection of the waste outlet (82) to the flexible connector (12) and forms an axially extending contact surface with the waste outlet (82); and
increasing friction between the flexible sleeve portion (22) and the waste outlet (82) to retain the toilet pan waste outlet connector (12) on the outlet (82), wherein the friction is increased by applying a circumferential force to the connector (12) using the fastener (30) of any preceding claim.

18. The method of claim 17, further comprising connecting a waste pipe connection portion (50) of the toilet pan waste outlet connector (12) to a waste pipe, prior to or subsequent to the application of the flexible sleeve portion (22) over the toilet pan waste outlet (82).

19. The method of claim 17 or 18, wherein
wherein the force is at least one of: adjustable; applied permanently; applied temporarily; and reduceable to subsequently reduce the friction between the sleeve and the outlet (82).

## Patentansprüche

1. Kit (10) zum Anschließen eines Schmutzwasserabflusses (82) einer Toilettenschüssel an ein Abflussrohr, wobei das Kit (10) Folgendes umfasst:
eine flexible Anschlussvorrichtung (12) für den Schmutzwasserabfluss einer Toilettenschüssel, wobei die flexible Anschlussvorrichtung (12) einen flexiblen Hülsenabschnitt (22), der zur Verbindung über den Abfluss (82) angepasst ist, einen Abflussrohr-Anschlussabschnitt (50) und einen Rohrleitungsabschnitt (40) beinhaltet,
wobei der flexible Hülsenabschnitt (22) dazu ausgelegt ist, eine sich axial erweiternde Kontaktfläche mit dem Abfluss (82) zu bilden; und wobei der Rohrleitungsabschnitt (40) ein flexibles Rohr ist und ebenfalls axial erweiterbar oder verkürzbar ist; und
eine Befestigungsvorrichtung (30), wobei die Befestigungsvorrichtung (30) dazu ausgelegt ist, in Umfangsrichtung eine Haltekraft auf den flexiblen Hülsenabschnitt (22) auszuüben, die dazu neigt, den flexiblen Hülsenabschnitt (22) an dem Abfluss (82) zu halten, indem die Reibung zwischen dem flexiblen Hülsenabschnitt (22) und dem Abfluss (82) gesteigert wird;
wobei der flexible Hülsenabschnitt (22) aus einem weichen synthetischen Gummi gefertigt ist, sodass der flexible Hülsenabschnitt (22) unter Kompression von der Befestigungsvorrichtung (30) verformt werden kann,
wobei eine Innenfläche (24) des flexiblen Hülsenabschnitts (22) radial derart gegen eine Außenfläche des Schmutzwasserabflusses (82) der Toilettenschüssel gedrückt werden kann, dass eine zylindrische Kontaktfläche die Verbindung des Schmutzwasserabflusses (82) mit der flexiblen Anschlussvorrichtung (12) abdichtet, und
wobei der flexible Hülsenabschnitt (22) Hülsenrippen (28), -knoten oder -nuten an der Außenfläche des flexiblen Hülsenabschnitts (22) zum Anordnen der Befestigungsvorrichtung (30) umfasst, wobei die Hülsenrippen (28), -knoten oder -nuten dabei helfen, eine längsgerichtete Position der Befestigungsvorrichtung (30) an dem flexiblen Hülsenabschnitt (22) aufrechtzuerhalten und sicherzustellen, dass eine Ebene, die durch den Umfang der Befestigungsvorrichtung (30) definiert ist, senkrecht zu der Längsachse des flexiblen Hülsenabschnitts (22) ist.

2. Kit (10) nach Anspruch 1, wobei die Befestigungsvorrichtung (30) mindestens eines der Folgenden ist: dazu ausgelegt, die Haltekraft zu verstellen; dazu ausgelegt, die Haltekraft zu reduzieren; und verengbar.

3. Kit (10) nach einem der vorhergehenden Ansprüche, wobei die Befestigungsvorrichtung (30) mindestens eines der Folgenden ist: vor der Verbindung mit dem Abfluss (82) an der Anschlussvorrichtung (12) angeordnet; und vor der Verbindung mit dem Abfluss (82) um den Hülsenabschnitt (22) der Anschlussvorrichtung (12) platziert.

4. Kit (10) nach einem der Ansprüche 1 oder 2, wobei in Verwendung zuerst die Anschlussvorrichtung (12) an den Abfluss (82) angeschlossen wird und die Befestigungsvorrichtung (30) anschließend angelegt wird.

5. Kit (10) nach einem der vorhergehenden Ansprüche, wobei die Befestigungsvorrichtung (30) aus einer oder mehreren der folgenden Gruppen ausgewählt ist: Bindern, Schlauchklemmen, Umreifung und Riemen.

6. Kit nach einem der vorhergehenden Ansprüche, wobei die Befestigungsvorrichtung (30) ein oder mehrere angelenkte Teile umfasst.

7. Kit (10) nach einem der vorhergehenden Ansprüche, wobei die Befestigungsvorrichtung (30) eines der Folgenden ist: eine eigenständige Komponente oder Gruppe von Komponenten, die von der Anschlussvorrichtung (12) getrennt werden kann; einstückig mit der Anschlussvorrichtung (12) ausgebildet.

8. Kit nach Anspruch 7, wobei die Befestigungsvorrichtung, wenn sie einstückig mit der Anschlussvorrichtung ausgebildet ist, zwei oder mehr Flanschflächen umfasst, die verstellbar getrennt sind.

9. Kit (10) nach einem der vorhergehenden Ansprüche, wobei die Befestigungsvorrichtung (30) dazu auslegbar ist, einen Innendurchmesser aufzuweisen, der größer ist als der größte Außendurchmesser der flexiblen Anschlussvorrichtung (12).

10. Kit nach einem der vorhergehenden Ansprüche, wobei die Befestigungsvorrichtung (30) derart in einem diskontinuierlichen Zustand anlegbar ist, dass die Befestigungsvorrichtung (30) anschließend an das Verbinden der Anschlussvorrichtung (12) an einem oder beiden Enden an die Anschlussvorrichtung (12) anlegbar oder davon lösbar ist.

11. Kit (10) nach einem der vorhergehenden Ansprüche, wobei der flexible Rohrleitungsabschnitt (40) der Anschlussvorrichtung (12) eine Anzahl von Wellrippen (42) umfasst, um zuzulassen, dass die Länge der Anschlussvorrichtung (12) verstellt wird, und zuzulassen, dass die Anschlussvorrichtung (12) sich biegen sowie sich erweitern kann, und die derart ausgelegt sind, dass der flexible Rohrleitungsabschnitt (40) seine Form beibehält, wenn er von einem Benutzer ausgelegt wird.

12. Kit (10) nach einem der vorhergehenden Ansprüche, wobei die Innenfläche (24) des flexiblen Hülsenabschnitts (22) eine zylindrische Innenfläche umfasst.

13. Kit (10) nach Anspruch 12, wobei die zylindrische Innenfläche (24) einen aufgeweiteten Abschnitt (26) zum Erleichtern des Einführens über den Schmutzwasserabfluss (82) der Toilettenschüssel umfasst.

14. Kit (10) nach einem der vorhergehenden Ansprüche, wobei der flexible Hülsenabschnitt (22) einen Schmutzwasserabfluss-Anschlussabschnitt (20) für eine Toilettenschüssel umfasst, der unter Verwendung einer Kombination aus einer Übermaßpassung und einer Schweißabdeckung (62) über einen starren ringförmigen Abschnitt (60) mit dem Rohrleitungsabschnitt (40) verbunden ist.

15. Kit (10) nach Anspruch 14, wobei der flexible Hülsenabschnitt (22) eine ringförmige Scheibe (29) zum Anbringen an dem starren ringförmigen Abschnitt (60) aufweist.

16. Kit (10) nach einem der vorhergehenden Ansprüche, wobei der Abflussrohr-Anschlussabschnitt (50) ein flexibles Element (52) aufweist, das aus einem weichen synthetischen Gummi gefertigt ist und eine Anzahl von flexiblen ringförmigen Rippen (54) aufweist, die nach außen hervorstehen, wobei die Rippen (54) einen geringeren Innendurchmesser als das Abflussrohr und einen größeren Außendurchmesser als das Abflussrohr aufweisen, sodass sich die Rippen (54) beim Einsetzen des Abflussrohr-Anschlussabschnitts (50) in das Abflussrohr biegen und so eine Abdichtung zwischen der flexiblen Anschlussvorrichtung (12) für den Schmutzwasserabfluss der Toilettenschüssel und dem Abflussrohr sicherstellen.

17. Verfahren zum Abdichten der flexiblen Anschlussvorrichtung (12) für den Schmutzwasserabfluss einer Toilettenschüssel des Kits nach einem der vorhergehenden Ansprüche mit einem Schmutzwasserabfluss (82) der Toilettenschüssel, wobei das Verfahren Folgendes umfasst:
Anlegen eines flexiblen Hülsenabschnitts (22) der Anschlussvorrichtung (12) für den Schmutzwasserabfluss einer Toilettenschüssel über den Schmutzwasserabfluss (82) der Toilettenschüssel und radiales Drücken der Innenfläche (24) des flexiblen Hülsenabschnitts (22) gegen eine Außenfläche des Schmutzwasserabflusses (82) der Toilettenschüssel, sodass eine zylindrische Kontaktfläche die Verbindung des Schmutzwasserabflusses (82) mit der flexiblen Anschlussvorrichtung (12) abdichtet und eine sich axial erweiternde Kontaktfläche mit dem Schmutzwasserabfluss (82) bildet; und
Steigern der Reibung zwischen dem flexiblen Hülsenabschnitt (22) und dem Schmutzwasserabfluss (82), um die Anschlussvorrichtung (12) für den Schmutzwasserabfluss der Toilettenschüssel an dem Abfluss (82) zu halten, wobei die Reibung durch Ausüben einer Umfangskraft auf die Anschlussvorrichtung (12) unter Verwendung der Befestigungsvorrichtung (30) nach einem der vorhergehenden Ansprüche gesteigert wird.

18. Verfahren nach Anspruch 17, ferner umfassend das Verbinden eines Abflussrohr-Anschlussabschnitts (50) der Anschlussvorrichtung (12) für den Schmutzwasserabfluss einer Toilettenschüssel mit einem Abflussrohr vor dem oder anschließend an das Anlegen des flexiblen Hülsenabschnitts (22) über den Schmutzwasserabfluss (82) der Toilettenschüssel.

19. Verfahren nach Anspruch 17 oder 18, wobei
wobei die Kraft mindestens eines der Folgenden ist: verstellbar; dauerhaft ausgeübt; vorübergehend ausgeübt; und reduzierbar, um anschließend die Reibung zwischen der Hülse und dem Abfluss (82) zu reduzieren.

## Revendications

1. Kit (10) pour connecter une sortie des eaux usées de cuvette des toilettes (82) à un tuyau d'évacuation, le kit (10) comprenant :
un connecteur de sortie des eaux usées de cuvette des toilettes flexible (12), le connecteur flexible (12) incluant une partie de gaine flexible (22) qui est adaptée pour une connexion sur la sortie (82), une partie de connexion (50) de tuyau d'évacuation et une partie de conduit (40) ; dans lequel :
la partie de gaine flexible (22) est configurée de manière à former une surface de contact s'étendant axialement avec la sortie (82) ; et dans lequel :
la partie de conduit (40) est un tuyau flexible et elle peut également être étendue ou contractée axialement ; et
un moyen de fixation (30), dans lequel le moyen de fixation (30) est configuré de manière à appliquer une force de retenue de manière circonférentielle sur la partie de gaine flexible (22), laquelle force de retenue tend à retenir la partie de gaine flexible (22) sur la sortie (82) en augmentant la friction entre la partie de gaine flexible (22) et la sortie (82) ; dans lequel :
la partie de gaine flexible (22) est réalisée à partir d'un caoutchouc synthétique mou de telle sorte que la partie de gaine flexible (22) puisse être déformée sous l'effet de la compression exercée par le moyen de fixation (30) ; dans lequel :
une surface interne (24) de la partie de gaine flexible (22) peut être pressée radialement contre une surface externe de la sortie des eaux usées de cuvette des toilettes (82) de telle sorte qu'une surface de contact cylindrique assure l'étanchéité de la connexion de la sortie des eaux usées (82) sur le connecteur flexible (12) ; et dans lequel :
la partie de gaine flexible (22) comprend des nervures (28), des nodules ou des gorges de gaine sur la surface externe de la partie de gaine flexible (22) pour agencer le moyen de fixation (30), les nervures (28), les nodules ou les gorges de gaine contribuant au maintien d'une position longitudinale du moyen de fixation (30) sur la partie de gaine flexible (22) et assurant qu'un plan qui est défini par la circonférence du moyen de fixation (30) est perpendiculaire à l'axe longitudinal de la partie de gaine flexible (22).

2. Kit (10) selon la revendication 1, dans lequel le moyen de fixation (30) est au moins l'un parmi : configuré pour régler la force de retenue ; configuré pour réduire la force de retenue ; et pouvant être serré.

3. Kit (10) selon l'une quelconque des revendications précédentes, dans lequel le moyen de fixation (30) est au moins l'un parmi : localisé sur le connecteur (12) avant la connexion sur la sortie (82) ; et placé autour de la partie de gaine (22) du connecteur (12), avant la connexion sur la sortie (82).

4. Kit (10) selon la revendication 1 ou 2, dans lequel, en utilisation, le connecteur (12) est en premier lieu connecté à la sortie (82) et le moyen de fixation (30) est appliqué ensuite.

5. Kit (10) selon l'une quelconque des revendications précédentes, dans lequel le moyen de fixation (30) est sélectionné parmi un ou plusieurs des groupes qui suivent : des attaches à tête d'équerre, des colliers de serrage, un cerclage et des sangles de serrage.

6. Kit selon l'une quelconque des revendications précédentes, dans lequel le moyen de fixation (30) comprend une ou plusieurs parties à charnière.

7. Kit (10) selon l'une quelconque des revendications précédentes, dans lequel le moyen de fixation (30) est l'un parmi : un composant distinct ou un groupe de composants distincts qui peuvent être séparés du connecteur (12) ; un moyen de fixation formé d'un seul tenant avec le connecteur (12).

8. Kit selon la revendication 7, dans lequel le moyen de fixation, lorsqu'il est formé d'un seul tenant avec le connecteur, comprend deux surfaces de bride ou plus qui sont séparées de manière réglable.

9. Kit (10) selon l'une quelconque des revendications précédentes, dans lequel le moyen de fixation (30) peut être configuré de manière à présenter un diamètre interne plus grand que le diamètre externe le plus grand du connecteur flexible (12).

10. Kit selon l'une quelconque des revendications précédentes, dans lequel le moyen de fixation (30) peut être appliqué dans un état discontinu, de telle sorte que le moyen de fixation (30) puisse être appliqué sur le connecteur (12) ou puisse en être enlevé suite à la connexion du connecteur (12) au niveau d'une extrémité ou des deux extrémités.

11. Kit (10) selon l'une quelconque des revendications précédentes, dans lequel la partie de conduit flexible (40) du connecteur (12) comprend un certain nombre de nervures ondulées (42) de manière à permettre le réglage de la longueur du connecteur (12) et de manière à permettre la flexion de même que l'extension du connecteur (12), et qui sont configurées de telle sorte que la partie de conduit flexible (40) conserve sa forme lorsqu'elle est configurée par un opérateur.

12. Kit (10) selon l'une quelconque des revendications précédentes, dans lequel la surface interne (24) de la partie de gaine flexible (22) comprend une surface interne cylindrique.

13. Kit (10) selon la revendication 12, dans lequel la surface interne cylindrique (24) comprend une partie évasée (26) pour faciliter l'insertion sur la sortie des eaux usées de cuvette des toilettes (82).

14. Kit (10) selon l'une quelconque des revendications précédentes, dans lequel la partie de gaine flexible (22) comprend une partie de connexion de sortie des eaux usées de cuvette des toilettes (20) qui est connectée à la partie de conduit (40) via une partie annulaire rigide (60) en utilisant une combinaison d'un ajustement d'interférence et d'un capuchon de soudage (62).

15. Kit (10) selon la revendication 14, dans lequel la partie de gaine flexible (22) comporte un disque annulaire (29) pour une fixation sur la partie annulaire rigide (60).

16. Kit (10) selon l'une quelconque des revendications précédentes, dans lequel la partie de connexion (50) de tuyau d'évacuation comprend un élément flexible (52) qui est réalisé à partir d'un caoutchouc synthétique mou et qui comporte un certain nombre de nervures annulaires flexibles (54) qui font saillie vers l'extérieur, les nervures (54) présentant un diamètre interne qui est plus petit que celui du tuyau d'évacuation et un diamètre externe qui est plus grand que celui du tuyau d'évacuation, de telle sorte que les nervures (54) fléchissent suite à l'insertion de la partie de connexion (50) de tuyau d'évacuation à l'intérieur du tuyau d'évacuation, ce qui assure une étanchéité entre le connecteur de sortie des eaux usées de cuvette des toilettes flexible (12) et le tuyau d'évacuation.

17. Procédé pour assurer l'étanchéité du connecteur de sortie des eaux usées de cuvette des toilettes flexible (12) du kit selon l'une quelconque des revendications précédentes sur une sortie des eaux usées de cuvette des toilettes (82), le procédé comprenant :
l'application d'une partie de gaine flexible (22) du connecteur de sortie des eaux usées de cuvette des toilettes (12) sur la sortie des eaux usées de cuvette des toilettes (82) et la pression radiale sur la surface interne (24) de la partie de gaine flexible (22) contre une surface externe de la sortie des eaux usées de cuvette des toilettes (82) de telle sorte qu'une surface de contact cylindrique assure l'étanchéité de la connexion de la sortie des eaux usées (82) sur le connecteur flexible (12) et forme une surface de contact s'étendant axialement avec la sortie des eaux usées (82) ; et
l'augmentation de la friction entre la partie de gaine flexible (22) et la sortie des eaux usées (82) de manière à retenir le connecteur de sortie des eaux usées de cuvette des toilettes (12) sur la sortie (82), dans lequel la friction est augmentée en appliquant une force circonférentielle sur le connecteur (12) en utilisant le moyen de fixation (30) selon l'une quelconque des revendications précédentes.

18. Procédé selon la revendication 17, comprenant en outre la connexion d'une partie de connexion (50) de tuyau d'évacuation du connecteur de sortie des eaux usées de cuvette des toilettes (12) sur un tuyau d'évacuation, avant l'application de la partie de gaine flexible (22) sur la sortie des eaux usées de cuvette des toilettes (82) ou suite à cette application.

19. Procédé selon la revendication 17 ou 18, dans lequel :
la force est au moins l'un parmi : réglable ; appliquée en permanence ; appliquée temporairement ; et susceptible d'être réduite de manière à réduire subséquemment la friction entre la gaine et la sortie (82).
